# EUROPEAN PATENT APPLICATION

(11) **EP 2 492 444 A1**
(43) Date of publication of application: **29.08.2012**
(21) Application number: 11192927.9
(22) Date of filing: 12.12.2011
(51) Int. Cl.: F01D 5/28, C04B 37/02, B23K 1/00, B23K 20/16

(54) **Plating of ceramic matrix composite parts as metal-ceramic joining method in gas turbine hardware**

(30) Priority: 22.02.2011 US 929878
(71) Applicant: General Electric Company, Schenectady, New York 12345 (US)
(72) Inventor: Lacy, Benjamin Paul, Greer, SC 29650 (US); Garcia-Crespo, Andres, Greenville, SC 29615 (US)
(74) Representative: Cleary, Fidelma

(57) **Abstract**

Method of joining a ceramic matrix composite article to a metallic component by providing the ceramic matrix composite article with a metallic region which bonds to the metallic component.

## Description

The present invention relates to joining of ceramic matrix composites (CMCs) to metal components, such as metal parts of a gas turbine. More particularly, the invention provides a technique whereby metal may be joined to a CMC that can then be used to attach the CMC to a metal structure. In one embodiment, the technique provides a chemically bonded joint of metal to CMC to reduce issues related to different thermal expansion rates and alleviate having to make an extremely tight tolerance mechanical joint.

### BACKGROUND OF THE INVENTION

It is known that ceramic matrix composites (CMCs) can be utilized in gas turbines at much higher temperatures than metals. Replacing metal parts, such as buckets, nozzles, shrouds, liners and transition pieces (TPs), with CMCs can allow operation at higher temperatures and/or reduce cooling requirements, thus increasing turbine efficiency. However, the CMCs must be mounted in some way to the metal structure of the turbine. This mounting is difficult not only because the CMC is a different material and hence cannot readily be welded to the metal but also because the CMC has a different coefficient of thermal expansion than the metal, so that as the CMC heats up, it expands at a slower rate than the metal, thereby making it difficult to mount to the metal.

US 7,249,462 discusses CMC to CMC brazing with a mechanical joint. US 6,709,230 discusses using an adhesive or sintered bond joint. US 4,643,648 discusses using a sintered silicon nitride or carbide and hot isostatic pressing of metal powder to form the joint. US 2009/0010755A1 discusses a method of bolting CMC to metal.

An improved way of joining CMCs to metal parts, such as metal parts employed in gas turbine components may be desired. The present invention seeks to satisfy that desire.

### BRIEF DESCRIPTION OF THE INVENTION

It has now been discovered, according to the present invention, that it is possible to effectively join a CMC to a bond metal by utilizing brazing, vapor deposition, welding, plating (electroplating or electroless plating), or a combination thereof, to bind the bond metal onto the CMC. A metal mounting structure can then be brazed or welded to the bond metal. To minimize thermal expansion, narrow strips or circles, rectangles, or squares of metal can be plated to the CMC which can then be welded or brazed to an expansion joint to handle the differences in thermal expansion.

In a first aspect, the invention resides in a method of joining a ceramic matrix composite article to a metallic component, by providing the ceramic matrix composite article with a metallic region which bonds to the metallic component, thereby joining the ceramic matrix composite article to the metallic component.

In a second aspect, the invention resides in a ceramic matrix composite article comprising a mounting region which is provided with a metallic region to facilitate bonding of the ceramic matrix composite to a metallic component.

The invention allows for a much easier integration of CMC parts into a gas turbine, and eliminates the need for complicated mechanical mounts. The invention allows for expansion of the number of regions where CMCs can be successfully utilized, and may also allow for utilization in other devices, such as for example, rockets, steam turbines and nuclear equipment.

### BRIEF DESCRIPTION OF THE DRAWINGS

Embodiments of the invention will now be described, by way of example only, with reference to the accompanying drawings in which:
Figure 1 is a CMC article onto which metal strips have been applied at a desired attachment location;
Figure 2 is a side view of the CMC article of Figure 1 in the direction of arrow 2-2 in which a metallic flexible joint piece has been welded or brazed to the metal strips;
Figure 3 shows the CMC article of Figure 2 inserted into a metal holder with the metallic flexible joint piece either brazed or welded to the metal holder on one side and the metal strips on the other, thereby providing a bond between CMC article and metal holder;
Figure 4 shows an alternative CMC-metal assembly;
Figure 5 is view in the direction of the arrows 5-5 in Figure 4;
Figure 6 shows an alternative embodiment of a CMC article mounted in a metal holder with a metallic flexible joint piece either brazed or welded to the metal holder as shown.

### DETAILED DESCRIPTION OF THE INVENTION

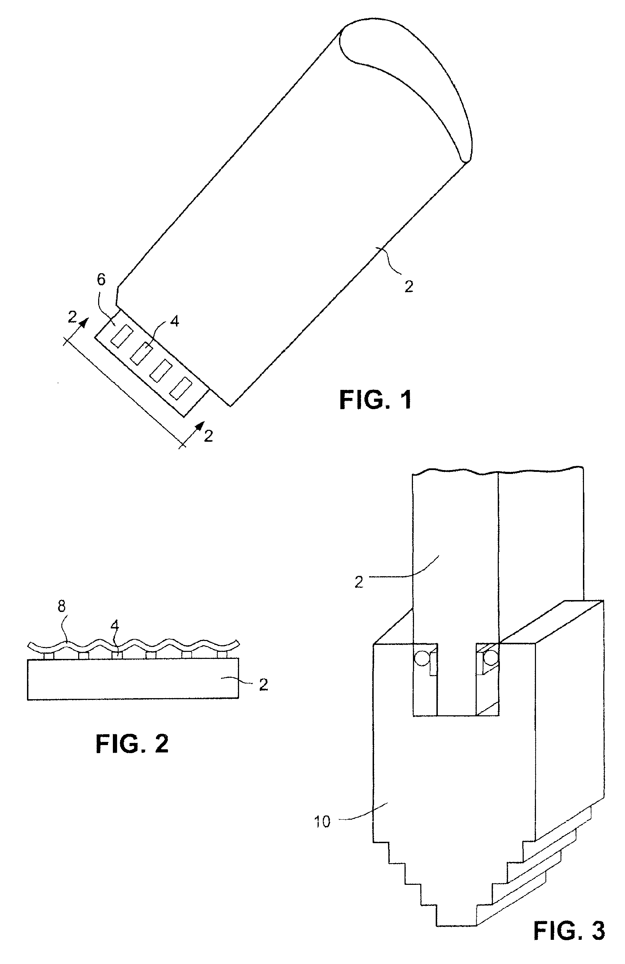

Referring to Figure 1, there is shown a CMC article 2, in this case a turbine bucket, where metal plating in the form of metal strips 4 has been brazed, vapor deposited, welded, electroplated, bonded by electroless plating, or any combination thereof, on the CMC article 2 at the desired attachment location 6. The metallic strips are usually of nickel. More metal plating could be bonded to the CMC article 2 but, in this instance, metal strips only are used to reduce the impact of different thermal expansion rates between the metal of the strips and the CMC article. As an alternative to metal strips, discs, squares or other metallic shapes may be used.

Figure 2 shows a side view of the CMC article 2 where a metallic flexible joint piece 8 has been welded or brazed to the metal strips 4. This accommodates different expansion rates between the CMC article and the metal component (metal holder), if needed.

Figure 3 shows the CMC article 2 inserted into a metal component, in this case a metal holder 10. The metallic flexible joint piece 8 may be either brazed or welded to the metal holder 10 on one side and to the metal strips 4 on the other, providing a bond between CMC article 2 and the metal holder 10. The metallic flexible joint piece 8 may be locked into the metal holder 10 instead of welded/brazed, if desired.

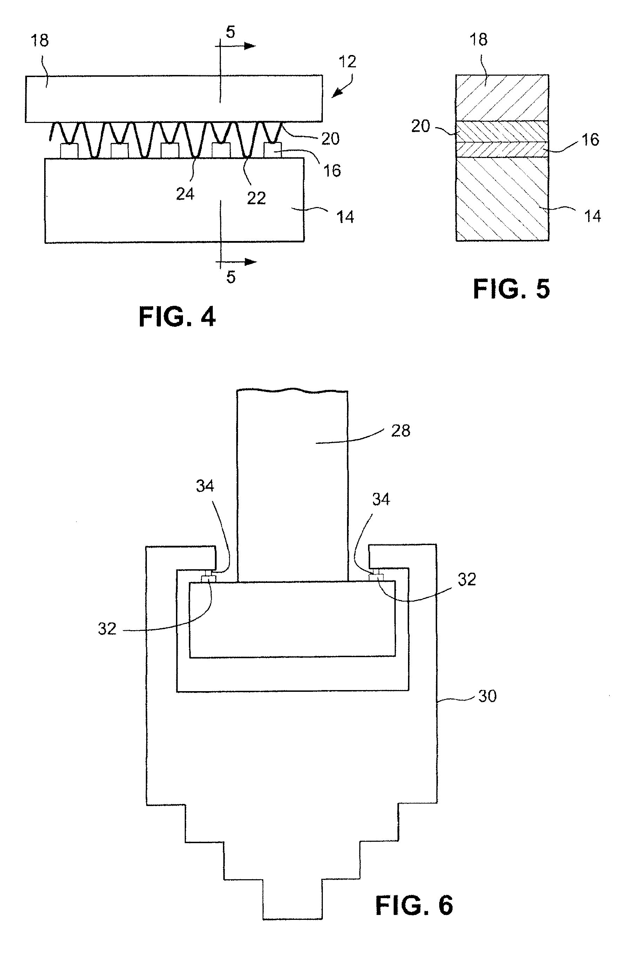

Figure 4 shows a metal/CMC assembly wherein the CMC component 14 is provided with metal strips 16 and the metal component 18 is provided with a flexible strip 20 which is bonded to the metal strips by any convenient method, e.g. brazing or welding. The intermediate non-bonded regions 22 of the flexible strip 20 are contoured as shown in Figure 4 such that they contact the surface of the CMC component 14 between the metal strips as shown at 24 to provide a sealing effect. The flexible strip thus can vary in its profile from sinusoidal, to notched, to square wave. Wave amplitude may vary and some of the peaks may not come into actual contact with either the CMC article or the metal, but may still provide a sealing effect. In Figure 4, the flexible strip 20 is ribbon-like along the line of the joint and provides a seal in the region between the CMC 14 and the metal component 18.

Figure 5 is view along the arrows line 5-5 in Figure 4. In Figure 5, the CMC is shown to the right and the metal component is shown to the left. The metal strip 16 is mounted to the CMC 14 and the flexible strip 20 is bonded to the metal strip 16. The flexible strip 20 could be wider than the metal strip if desired to improve sealing away from the strip.

Figure 6 is an alternative embodiment showing the CMC article in the form of a bucket having a metal clam shell arrangement 30 which is clamped around a CMC vane 28, so that the joint piece can be attached to the rotor similarly to a metal bucket. The CMC component 28 is provided with metal strips 32 bonded thereto by any suitable method (e.g., brazing or welding) and a flexible metal strip 34 is bonded to the top of the metal strips 32 as described herein, to accommodate expansion and contraction between the CMC 28 and the metal holder 30.

As will be seen from Figure 6, the orientation of the joint can be varied, i.e., the joint may be disposed horizontally rather than vertically. Moreover, turbine buckets are but one example of a hot gas path component where the joint of the invention can be used. CMC shrouds, nozzles, seals and blades or pieces thereof could be joined similarly.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of joining a ceramic matrix composite article (2,14,28) to a metallic component (10,18,30), comprising providing said ceramic matrix composite article (2,14,28) with a metallic region (4,16,32) which bonds to said metallic component (10,18,30).

2. A method according to claim 1 wherein said metallic region comprises a series of metallic strips (4,16,32).

3. A method according to claim 2, wherein a metallic flexible joint piece (8,20,34) is bonded to said series of metallic strips (4,16,32).

4. A method according to claim 1 further comprising bonding said metallic region (4,16,32) to said ceramic matrix composite article (2,14,28) by brazing, vapor deposition, welding, electroplating, electroless plating, or any combination thereof.

5. A method according to claim 1 wherein said metallic region (4,16,32) is nickel.

6. A method according to claim 1 wherein said metallic component (10,18,30) is a gas turbine component.

7. A method according to claim 1 further comprising joining said metallic region (4,16,32) to the metallic component (10,18,30) by brazing or welding.

8. A method according to claim 3 further comprising joining said metallic flexible joint piece (8,20,34) to the metallic region (4,16,32) by brazing or welding.

9. A method according to claim 3 further comprising joining said metallic flexible joint piece (8,20,34) to the metallic component (10,18,30) by brazing or welding.

10. A ceramic matrix composite article (2,14,28) comprising a mounting region said mounting region provided with a metallic region (4,16,32).

11. A ceramic matrix composite article according to claim 10, wherein said metallic region comprises a series of metallic strips (4,16,32).

12. A ceramic matrix composite article according to claim 11, wherein a metallic flexible joint piece (8,20,34) is bonded to said series of metallic strips (4,16,32).

13. A ceramic matrix composite article according to any of claims 1 to 12 which is selected from a turbine bucket, a nozzle, a shroud, a liner and a transition piece mating the liner to a nozzle.
